# FASCICULE DE BREVET EUROPEEN

(11) **EP 4 486 606 B1**
(45) Date de publication et mention de la délivrance du brevet: **04.03.2026**
(21) Numéro de dépôt: 23702350.2
(22) Date de dépôt: 01.02.2023
(51) Int. Cl.: B60S 1/48, B60S 1/56

(54) **DISPOSITIF DE NETTOYAGE DE CAPTEURS DE VÉHICULE AUTOMOBILE COMPRENANT PLUSIEURS BLOCS DE VANNES MONTÉS EN SÉRIE**
SENSORREINIGUNGSVORRICHTUNG FÜR KRAFTFAHRZEUGEN MIT MEHREREN IN REIHE GESCHALTETEN VENTILBLOCKEN
SENSOR CLEANING DEVICE FOR AUTOMOTIVE VEHICLES COMPRISING SEVERAL VALVE BLOCKS MOUNTED IN SERIES

(30) Priorité: 28.02.2022 FR 2201732
(43) Date de publication de la demande: 08.01.2025
(73) Titulaire: VALEO SYSTEMES D'ESSUYAGE, 78322 Le Mesnil Saint Denis (FR)
(72) Inventeur: BRETAGNOL, Frederic, 78322 LE MESNIL SAINT DENIS (FR); TREBOUET, Marcel, 78322 LE MESNIL SAINT DENIS (FR)
(74) Mandataire: Valeo Visibility
(86) Numéro de dépôt international: PCT/EP2023/052487
(87) Numéro de publication internationale: WO 2023/160976

(56) Documents cités:
- DE-A1- 102020 115 754
- FR-A1- 2 821 453
- US-A1- 2019 277 412
- US-A1- 2020 001 830
- US-A1- 2020 317 160

## Description

L'invention concerne les dispositifs de nettoyage de capteurs de véhicule automobile destinés à être embarqués sur un véhicule automobile.

Les véhicules automobiles comprennent de plus en plus de capteurs d'assistance à la conduite de véhicules automobiles qui peuvent faire l'objet de différents types de salissures. On peut par exemple citer les différentes caméras ou encore les capteurs de distance, les capteurs à ultrason, les radars, les lidars ou encore les capteurs de pluie placés sur le véhicule.

Or, ces salissures peuvent conduire à un dysfonctionnement de certains dispositifs d'aide à la conduite ou à l'apparition de difficultés pour un utilisateur du véhicule (manque de visibilité à cause de salissures sur le pare-brise). Il est donc nécessaire de prévoir au moins un dispositif de nettoyage de ces surfaces.

Classiquement, de tels dispositifs de nettoyage comprennent un réservoir dans lequel du liquide de nettoyage est stocké et d'un circuit de distribution fluidique composé de différentes canalisations ou tuyaux permettant d'acheminer le liquide de nettoyage vers au moins une buse de nettoyage placée devant une surface de manière à projeter du liquide de nettoyage sur cette dernière (il y a en règle générale plusieurs buses de nettoyage pour plusieurs surfaces).

Une pompe destinée à projeter du liquide de nettoyage dans le circuit de distribution fluidique jusqu'à la buse de nettoyage est généralement montée directement sur le réservoir. Plus précisément, un tube d'admission de liquide de la pompe est monté en force dans une ouverture ménagée dans le réservoir (un joint permet de garantir l'étanchéité de l'ensemble), l'orifice de sortie de liquide est quant à lui connecté au circuit de distribution fluidique.

Il est également connu de placer, sur le circuit de distribution fluidique, un bloc de distribution de liquide de nettoyage (ou blocs de vannes) comprenant par exemple plusieurs vannes disposées entre la pompe et la ou les buses de nettoyage, chaque vanne pouvant être reliée fluidiquement à une buse de nettoyage. Ce bloc de vannes permet par exemple une ouverture sélective des vannes pour ne projeter du liquide de nettoyage qu'à travers les buses de nettoyage situées face à un capteur devant être nettoyé et conserver les autres buses de nettoyage fermées. Il est également possible d'utiliser le bloc de vannes comme palier intermédiaire permettant une pressurisation maximale d'une partie du circuit de distribution fluidique située entre la pompe et le bloc de distribution afin de limiter les pertes de charge jusqu'aux buses de nettoyage.

Il est dès lors envisagé de placer plusieurs blocs de distribution de liquide de nettoyage au niveau du circuit de distribution fluidique, chaque bloc de distribution de liquide de nettoyage étant relié fluidiquement à au moins une buse de nettoyage. Il est de plus avantageux de déporter ces blocs de distribution de liquide de nettoyage afin de les placer au plus près de la ou des buses auxquelles ils sont reliés (cela permet par exemple de limiter les pertes de charges entre la sortie de liquide de nettoyage du bloc de distribution de liquide de nettoyage et la sortie de ce même liquide de nettoyage de la ou des buses reliées).

Cependant, la multiplication des blocs de distribution et leur placement à proximité des buses de nettoyage conduit à une augmentation de la masse de câbles électriques embarqués et du nombre de connexion électriques dus à la nécessité de connexion de l'ensemble des blocs de distribution de fluide à une unité de contrôle, ce qui a pour conséquence une augmentation de la masse de câbles embarquée mais également à une augmentation du coût de fabrication du dispositif de nettoyage. Cela peut également conduire à l'obtention d'un dispositif de nettoyage de capteurs très complexes au niveau de son architecture.

De plus, le dispositif de nettoyage de capteurs est difficilement reconfigurable. En effet, et si l'on souhaite ajouter un bloc de distribution de liquide de nettoyage, il est nécessaire de le raccorder à l'unité de contrôle et de reprogrammer l'ensemble du dispositif de nettoyage de capteurs afin que le nouveau bloc de distribution de liquide de nettoyage soit reconnu. Le document US 2020 001830 A1 montre un dispositif de nettoyage selon l'état de la technique.

L'invention a notamment pour but de fournir un dispositif de nettoyage de capteurs comprenant plusieurs blocs de distribution de liquide de nettoyage dont l'architecture est simple, dont la masse de câbles électriques utilisée est faible, le dispositif de nettoyage de capteurs étant facilement reconfigurable.

A cet effet l'invention a pour objet un dispositif de nettoyage de capteurs de véhicule automobile destiné à être monté sur un véhicule automobile, le dispositif comprenant au moins un réservoir de liquide de nettoyage et plusieurs buses de nettoyage pour projeter le liquide de nettoyage sur les différents capteurs à nettoyer, le dispositif de nettoyage étant caractérisé en ce qu'il comprend :
- une unité de contrôle configurée pour recevoir et transmettre des informations provenant des différents capteurs,
- un bloc principal de vannes configuré pour contrôler l'acheminement de liquide de nettoyage vers un premier ensemble de buses, le bloc principal de vannes comprenant un circuit principal de commande configuré pour recevoir des informations provenant de l'unité de contrôle,
- au moins un premier bloc secondaire de vannes configuré pour contrôler l'acheminement de liquide de nettoyage vers un second ensemble de buses, le premier bloc secondaire de vannes comprenant un premier circuit secondaire de commande monté électriquement en série par rapport au circuit principal de commande et configuré pour recevoir des informations provenant du bloc principal de vannes et transmettre des informations au bloc principal de vannes, la connexion électrique d'acheminement des informations entre l'unité de contrôle et le circuit principal de commande ainsi qu'entre le circuit principal de commande et le premier circuit secondaire de commande étant réalisé par un réseau électrique multiplexé.

Ainsi, on obtient un dispositif de nettoyage de capteurs dont l'architecture est simplifiée du fait du montage en série des différents blocs de vannes entre eux. De plus, l'utilisation d'un réseau électrique multiplexé pour la transmission d'information entre les circuits de commande entre eux et avec l'unité de contrôle permet de diminuer de manière importante la masse / quantité / longueur totale de câbles nécessaire au fonctionnement du dispositif de nettoyage de capteurs.

Enfin, l'utilisation d'un réseau électrique multiplexé permettant l'acheminement centralisé de plusieurs informations dans les deux sens entre le circuit de commande principal et un ou plusieurs circuits de commande secondaires, ce qui permet une reconfiguration aisée du dispositif de nettoyage de capteurs. En effet, et en cas d'ajout d'un bloc de vannes supplémentaire, l'architecture de l'ensemble (montage en série des blocs de vannes et connexion par un réseau électrique multiplexé) permet, grâce à l'exécution de trames spécifiques, une reconfiguration automatique du dispositif de nettoyage de capteurs (i.e. un ré-adressage automatique des vannes).

Suivant d'autres caractéristiques optionnelles du dispositif de nettoyage de capteurs prises seules ou en combinaison :
- chaque bloc de vannes peut comprendre des électrovannes et un support de connexion électrique des électrovannes au circuit de commande ;
- chaque bloc secondaire de vannes peut comprendre une résistance de tirage et un interrupteur configuré pour connecter ou déconnecter la résistance de tirage au réseau électrique multiplexé. Cette résistance de tirage est utilisée lors d'un procédé d'adressage décrit ci-dessous ;
- chaque bloc secondaire de vannes peut comprendre une source de courant constant et un interrupteur configuré pour connecter ou déconnecter la source de courant au réseau électrique multiplexé. Cette source de courant constant est utilisée lors d'un procédé d'adressage décrit ci-dessous ;
- chaque bloc secondaire de vannes peut comprendre un shunt connecté au réseau électrique multiplexé et configuré pour détecter une intensité de courant le traversant ;
- chaque bloc secondaire de vannes peut comprendre des moyens de détermination de la position du bloc de vannes sur le réseau électrique multiplexé en fonction de l'intensité de courant mesurée ; et
- Le dispositif de nettoyage de capteurs peut comprendre au moins un second bloc secondaire de vannes configuré pour contrôler l'acheminement de liquide de nettoyage vers un troisième ensemble de buses, le second bloc secondaire de vannes comprenant un second circuit secondaire de commande monté électriquement en série par rapport au premier circuit secondaire de commande et configuré pour recevoir des informations provenant du premier bloc secondaire de vannes et transmettre des informations au premier bloc secondaire de vannes, la connexion entre le premier circuit secondaire de commande et le second circuit secondaire de commande étant réalisé par un réseau électrique multiplexé.

L'invention a également pour objet un procédé d'adressage de blocs de vannes d'un dispositif de nettoyage de capteurs selon l'invention, le procédé d'adressage comprenant au moins une fois la réalisation des étapes suivantes :
- Première mesure d'un courant traversant les blocs secondaires de vannes non adressés dans une première configuration,
- Seconde mesure d'un courant traversant les blocs secondaires de vannes non adressés dans une seconde configuration,
- Détermination des blocs secondaires de vannes non adressés dont la différence d'intensité entre la seconde mesure et la première mesure est inférieure à une première valeur seuil,
- Troisième mesure d'un courant traversant les blocs secondaires de vannes dont la différence d'intensité entre la seconde mesure et la première mesure est inférieure à une première valeur seuil, ces blocs secondaires de vannes étant dans une troisième configuration,
- Détermination et adressage du bloc secondaire de vannes dont la différence d'intensité entre la troisième mesure et la première mesure est inférieure à une seconde valeur seuil.

Suivant d'autres caractéristiques optionnelles du procédé d'adressage prises seules ou en combinaison :
- les étapes du procédé d'adressage peuvent avoir lieu au démarrage du véhicule ;
- les étapes du procédé d'adressage peuvent avoir lieu après ajout d'un bloc secondaire de vannes supplémentaire ;
- les différentes configurations peuvent être les suivantes :
   - La première configuration peut correspondre à un état dans lequel une résistance de tirage et une source de courant constant présentes au niveau de chaque bloc de vannes sont déconnectées du réseau électrique multiplexé,
   - La seconde configuration peut correspondre à un état dans lequel la résistance de tirage est connectée au réseau électrique multiplexé, la source de courant constant étant déconnectée du réseau électrique multiplexé, et
   - La troisième configuration peut correspondre à un état dans lequel la résistance de tirage et la source de courant constant sont connectées au réseau électrique multiplexé ;
- les différentes intensités peuvent être détectées par un shunt connecté au réseau électrique multiplexé ; et
- le courant traversant les blocs secondaires de vannes non adressés peut être injecté au moins en partie par des sources de courant constant présentes dans les blocs secondaires de vannes non adressés.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue schématique d'un dispositif de nettoyage de capteurs de véhicule automobile selon l'invention,
[Fig. 2] la figure 2 est une vue éclatée d'un bloc de vannes selon l'invention, et
[Fig. 3] la figure 3 est une représentation des étapes d'un procédé d'adressage selon l'invention.

### Description détaillée

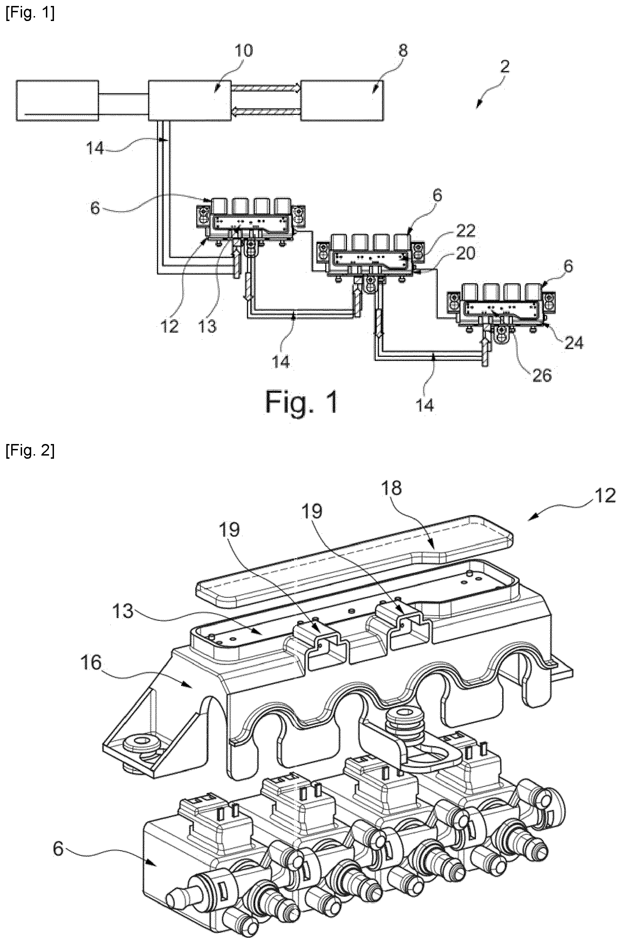

On se réfère désormais à la figure 1 illustrant un exemple d'un dispositif de nettoyage 2 de capteurs (un capteur 8 sur la figure 1) de véhicule automobile destiné à être monté sur un véhicule automobile. Comme expliqué plus haut, ce dispositif de nettoyage permet d'assurer le bon fonctionnement des capteurs embarqués sur un véhicule et exposés à des salissures.

De manière assez classique, le dispositif de nettoyage comprend un réservoir de liquide (non représenté sur les figures) de nettoyage sur lequel est montée une pompe. La pompe est montée dans un renfoncement du réservoir destiné à l'accueillir, le réservoir comprenant un orifice au travers duquel un tube d'admission de la pompe est monté, avec un joint à l'interface entre le réservoir et la pompe au niveau de l'orifice pour assurer l'étanchéité de l'ensemble. La pompe est de manière classique une pompe standard comprenant par exemple un corps principal de forme tubulaire. Ce corps principal peut être composé d'une première partie de pompage et d'une seconde partie d'entraînement comprenant un moteur électrique. La première partie de pompage comprend un tube d'admission de liquide et un tube de refoulement de liquide afin de pouvoir recevoir du liquide de nettoyage du réservoir et de le refouler à une pression supérieure à la pression en entrée de pompe. Le tube d'admission de liquide peut être placé à une extrémité libre de la première partie de pompage et être coaxial avec le corps principal de la pompe en partageant avec ce dernier le même axe de révolution. La seconde partie d'entraînement peut s'étendre à partir de la première partie de pompage dans une direction perpendiculaire à l'axe de révolution du corps principal.

La seconde partie d'entraînement peut être située au-dessus de la première partie de pompage et comprendre un moteur électrique et, à son extrémité libre, un connecteur permettant de connecter la pompe à une source d'alimentation électrique.

Plusieurs buses de nettoyage (non représentées sur les figures) sont situées à l'autre extrémité du dispositif de nettoyage et destinées à être placée devant les capteurs à nettoyer afin d'y projeter du liquide de nettoyage pressurisé.

Le dispositif de nettoyage 2 comprend en outre des tuyaux (ou canalisations) reliant les différents organes (pompe, buse de nettoyage, etc.) entre eux pour former un circuit de distribution fluidique.

Le dispositif de nettoyage 2 comprend en outre plusieurs blocs de vannes de liquide de nettoyage plusieurs vannes 6 (quatre dans le cas présent). La pompe est configurée pour pomper le liquide de lavage du réservoir et l'envoyer vers le bloc de vannes et les buses de nettoyage.

Les vannes 6 des blocs de vannes sont configurées pour être reliées fluidiquement respectivement aux buses (une vanne 6 reliée à une buse par exemple, le nombre de vannes et de buses pouvant varier). Les vannes 6 de chaque bloc de vannes peuvent être reliées fluidiquement entre elles et aux autres blocs de vannes. Les vannes 6 sont configurées pour transmettre sélectivement le liquide de lavage pompé vers les buses de nettoyage associées. Les vannes 6 sont par exemple des électrovannes utilisées de manière classique dans ce type dispositif de nettoyage. Les vannes 6 peuvent être disposées en parallèle, c'est-à-dire qu'elles sont toutes reliées à un canal fluidique du bloc de distribution. Ce canal fluidique est relié à une entrée du bloc de vannes connectée à la pompe. Une sortie du bloc de vannes 4 est quant à elle obturée par un capuchon.

Ainsi, en fonctionnement, l'activation de la pompe permet de transmettre le liquide de nettoyage du réservoir vers les blocs de vannes et vers les buses de nettoyage.

Les blocs de vannes sont des blocs modulaires de sorte que le nombre de vannes 6 peut être facilement modifié pour s'adapter au nombre de buses de nettoyage ou à une configuration particulière du dispositif de nettoyage, par exemple en fonction du modèle du véhicule automobile si le dispositif de nettoyage 2 est disposé sur un véhicule automobile.

Les différents capteurs sont reliés à au moins une unité de contrôle 10 configurée pour recevoir et transmettre des informations provenant des différents capteurs, en particulier une information relative à une nécessité de nettoyage desdits capteurs. L'unité de contrôle 10 peut par exemple être formée par un boîtier de servitude intelligent raccordé à une source d'énergie, typiquement la batterie du véhicule automobile. Elle pourrait également être formée par une unité de contrôle électronique.

L'unité de contrôle 10 est reliée électriquement à un bloc principal de vannes 12 configuré pour contrôler l'acheminement de liquide de nettoyage vers un premier ensemble de buses, le bloc principal de vannes 12 comprenant un circuit principal de commande 13 configuré pour recevoir des informations provenant de l'unité de contrôle 10, typiquement une information de nettoyage provenant d'un ou plusieurs capteurs. Cette information peut concerner une ou plusieurs vannes 6 du bloc principal de vannes 12. Cette transmission d'informations est effectuée par un réseau électrique multiplexé 14, ce qui permet de réduire drastiquement la quantité de câblage électrique embarquée sur le véhicule. Il peut s'agir, de manière classique, d'un réseau électrique multiplexé de type bus Can ou bus LIN.

Le bloc principal de vannes 12, comme les autres blocs de vannes décrits par la suite, peut comprendre, en plus des vannes 6 le composant et décrites ci-dessus, un support de connexion électrique 16 des électrovannes au circuit principal de commande 13. Ce dernier comprend un premier espace ménagé pour y fixer le circuit principal de commande 13 (et pouvant être recouvert par un cache 18) et un second pour fixer les électrovannes. Il peut également comprendre des connecteurs 19 du réseau électrique multiplexé 14, un connecteur permettant de connecter le bloc principal de vannes 12 à l'unité de contrôle 10 et autre permettant de connecter le bloc principal de vanne 12 à un premier bloc secondaire de vannes 20. Cette configuration est illustrée à la figure 2.

Comme cela est visible sur la figure 1, le dispositif de nettoyage 2 de capteurs comprend au moins un premier bloc secondaire de vannes 20 configuré pour contrôler l'acheminement de liquide de nettoyage vers un second ensemble de buses, le premier bloc secondaire de vannes 20 comprenant un premier circuit secondaire de commande 22 monté électriquement en série par rapport au circuit principal de commande 13 et configuré pour recevoir des informations provenant du bloc principal de vannes 12 et transmettre des informations au bloc principal de vannes 12, la connexion électrique d'acheminement des informations entre l'unité de contrôle 10 et le circuit principal de commande 13 ainsi qu'entre le circuit principal de commande 13 et le premier circuit secondaire de commande 22 étant réalisé par le réseau électrique multiplexé 14.

En d'autres termes, l'unité de commande 10 peut transmettre et recevoir des informations du bloc principal de vannes 12 qui peut elle-même en transmettre et en recevoir du premier bloc secondaire de vannes 20 (via leurs circuits de commande respectifs). L'ensemble de ces informations est transmis par le réseau électrique multiplexé 14. Le premier bloc secondaire de vannes 20 comprend des connexions électriques avec le bloc principal de vannes 12 identiques à celles connectant ce dernier à l'unité de contrôle 10.

Comme cela est illustré sur la figure 1, il est possible d'ajouter un second bloc secondaire de vannes 24 comprenant un second circuit secondaire de commande 26 monté électriquement en série par rapport au premier circuit secondaire de commande 22 et configuré pour recevoir des informations provenant du premier bloc secondaire de vannes 20 et transmettre des informations au premier bloc secondaire de vannes 20, la connexion électrique d'acheminement des informations entre l'unité de contrôle 10 et le circuit principal de commande 13, entre le circuit principal de commande 13 et le premier circuit secondaire de commande 22 ainsi qu'entre le premier circuit secondaire de commande 22 et le second circuit secondaire de commande 26 étant réalisé par le réseau électrique multiplexé 14.

On comprend donc qu'il s'agit d'un montage électrique en série de plusieurs blocs de vannes via un réseau électrique multiplexé 14, le premier d'entre eux étant connecté à l'unité de contrôle 10. Il est dès lors possible pour l'unité de contrôle 10 de transmettre des informations à toutes les vannes des différents blocs de vannes. Le bloc principal de vannes 12 est directement connecté à l'unité de contrôle 10, les blocs secondaires de vannes étant soit connecté au bloc principal de vannes 12 (s'il s'agit du premier bloc secondaire de vannes 20) ou à un autre bloc secondaire de vannes. Il est donc possible d'acheminer une information de l'unité de contrôle 10 à n'importe quelle vanne d'un bloc de vannes.

Comme expliqué plus haut, l'utilisation d'un réseau électrique multiplexé dans le cadre de ce branchement en série permet de réduire drastiquement la quantité de câbles électriques embarqués dans le véhicule.

De plus, cela permet de faire circuler une information dans les deux sens : il est donc possible que différentes informations parviennent au bloc principal de vannes 12 depuis un ou plusieurs blocs de vannes secondaires. Il est dès lors possible de programmer les différentes unités de commande ainsi que l'unité de contrôle 10 afin de réaliser des protocoles de diagnostic de bon fonctionnement de l'ensemble du dispositif de nettoyage ou encore d'identification et d'adressage des différentes vannes des différents blocs de vannes, par exemple au démarrage du véhicule, afin de s'assurer du bon adressage des différentes vannes 6 afin d'être certain d'activer la ou les vannes 6 destinées au lavage d'un ou plusieurs capteurs nécessitant un nettoyage. Cela rend en outre le dispositif de nettoyage 2 modulable car il serait possible d'ajouter au moins une vanne voire un bloc de vannes entier et de réadresser l'ensemble des vannes du dispositif de nettoyage 2 après cela.

De préférence, chaque bloc de vannes comprend une résistance de tirage et un interrupteur configuré pour connecter ou déconnecter la résistance de tirage au réseau électrique multiplexé. Cette résistance de tirage pourra être connectée ou non au réseau électrique multiplexée afin de pouvoir mesurer différentes intensités traversant le bloc de vanne concerné dans le cadre d'un procédé d'adressage de vannes 6 comme cela sera expliqué par la suite.

Chaque bloc de vannes peut également comprendre une source de courant constant et un interrupteur configuré pour connecter ou déconnecter la source de courant au réseau électrique multiplexé. Comme pour la résistance de tirage, la source de courant constant pourra être connectée ou non au réseau électrique multiplexée afin de pouvoir mesurer différentes intensités traversant le bloc de vanne concerné dans le cadre d'un procédé d'adressage de vannes 6 comme cela sera expliqué par la suite.

Chaque bloc de vannes peut en outre comprendre un shunt configuré connecté au réseau électrique multiplexé et configuré pour détecter une intensité de courant le traversant. Ce dernier est placé au niveau d'un circuit de commande et a pour de fournir une information représentative de l'intensité de courant le parcourant. Cette mesure d'intensité sera mise en œuvre dans le cadre d'un procédé d'adressage expliqué plus bas. On notera que les différents shunts constituent non seulement des moyens de mesure d'intensité mais également des moyens de protection contre les surintensités.

En relation avec les différents moyens décrits ci-dessus et utilisés dans le cadre d'un procédé d'adressage, chaque bloc de vannes peut comprendre des moyens de détermination de la position du bloc de vannes en fonction de l'intensité mesurée.

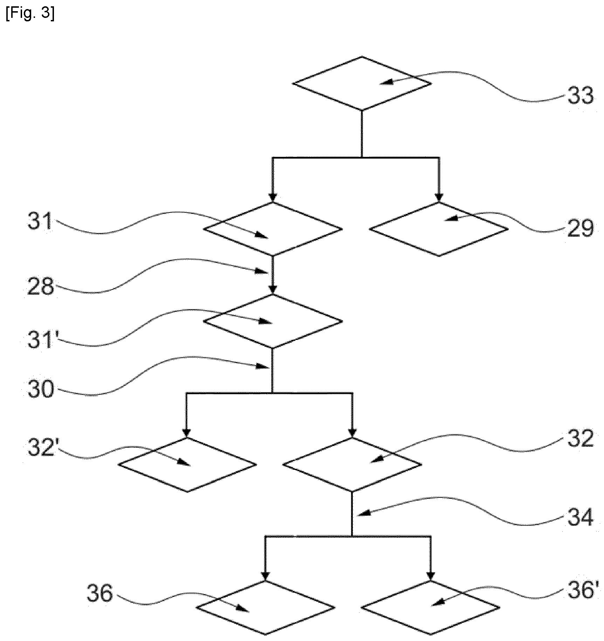

On va désormais décrire, à l'appui de la figure 3, un procédé d'adressage des vannes des blocs de vannes du dispositif de nettoyage 2 de capteurs.

Le processus est mis en œuvre au moyen de programmes stockés en mémoires de l'unité de contrôle 10 et des circuits de commande des blocs de vannes. Il s'agit d'identifier les vannes du bloc de vannes le plus éloigné du bloc principal de vannes 12 et non adressé afin de leur attribuer une adresse. Les différentes valeurs d'intensité mesurées et décrites ci-dessous peuvent être acheminées à l'unité de contrôle 10 à partir des blocs secondaires de vannes via le canal électrique multiplexé, tout comme les étapes de détermination décrites ci-dessous peuvent avoir lieu au niveau de cette unité de contrôle 10.

Le processus est démarré de préférence à la mise sous tension du dispositif de nettoyage 2 de capteurs. Il pourrait également être démarré après ajout d'une vanne 6 supplémentaire ou d'un bloc de vannes supplémentaire. Un courant d'une première intensité parcoure ce dernier (i.e. le réseau électrique multiplexé) et l'intensité est mesurée à un temps T0 au niveau des blocs de vannes non adressés, ces derniers étant dans une première configuration (étape 28 de la figure 3). Il s'agit d'une mesure de référence. La tension aux bornes du shunt peut être amplifiée par un amplificateur et intégrée au moyen d'un intégrateur linéaire ou quasi-linéaire, de préférence. De préférence, la première configuration correspond à un état dans lequel la résistance de tirage et la source de courant constant présentes au niveau de chaque bloc de vannes sont déconnectées du réseau électrique multiplexé. Ces dernières ne permettent donc pas d'apporter du courant supplémentaire. Aucune intensité n'est mesurée au niveau des blocs secondaires de vannes déjà adressés (représentés par la référence 29 sur la figure 3, les blocs secondaires de vannes non adressés étant référencés par le numéro 31, la somme des deux formant l'ensemble de blocs secondaires de vannes 33)). Leurs résistances de tirage respectives seront reconnectées au réseau électrique multiplexé à la fin du procédé d'adressage.

Dans un second temps T1, une seconde mesure d'un courant traversant les blocs secondaires de vannes non adressés et dans une seconde configuration est effectuée sur les blocs secondaires de vannes 31' pour lesquels la première mesure d'intensité a été effectuée (étape 30 de la figure 3). La seconde configuration peut correspondre à un état dans lequel la résistance de tirage est connectée au réseau électrique multiplexé, la source de courant constant étant déconnectée du réseau électrique multiplexé. L'intensité mesurée correspond à la somme de l'intensité de référence et de celle du courant provenant de la résistance de tirage.

L'étape suivante consiste à déterminer les blocs secondaires de vannes non adressés dont la différence d'intensité entre la seconde mesure (la somme de l'intensité de référence et de celle du courant provenant de la résistance de tirage) et la première mesure (intensité de référence) est inférieure à une première valeur seuil (blocs de vannes 32 sur la figure 3), par exemple 1,5 mA. Les autres blocs secondaires de vannes (référencés 32' sur la figure 3, dont cette différence est supérieure à la première valeur seuil, sont les plus proches du bloc principal de vannes 12 et ne peuvent pas être le bloc secondaire de vannes le plus éloigné du bloc principal de vannes 12 et non adressé. Les résistances de tirage de ces derniers sont déconnectées et plus aucune mesure n'est effectuée au niveau de ces derniers.

Ensuite, une troisième mesure d'un courant traversant les blocs secondaires de vannes dont la différence d'intensité entre la seconde mesure et la première mesure est inférieure à une première valeur seuil est effectuée à un temps T2, ces blocs secondaires de vannes étant dans une troisième configuration (étape 34 de la figure 3). Cette configuration peut correspondre à un état dans lequel la résistance de tirage et la source de courant constant de ces blocs de vannes sont connectées au réseau électrique multiplexé. Dès lors, L'intensité mesurée correspond à la somme de l'intensité de référence, de celle du courant provenant de la résistance de tirage et de celle du courant provenant de la source de courant constant, par exemple égale à 2 mA.

Enfin, la dernière étape consiste à déterminer le bloc secondaire de vannes dont la différence d'intensité entre la troisième mesure (la somme de l'intensité de référence, de celle du courant provenant de la résistance de tirage et de celle du courant provenant de la source de courant constant) et la première mesure (intensité de référence) est inférieure à une seconde valeur seuil (bloc secondaire de vannes 36 sur la figure 3). Ce bloc de vannes est le plus éloigné du bloc principal de vannes 12 dont les vannes ne sont pas adressées. Une adresse peut être attribuée aux vannes de ce bloc de vannes.

Le procédé décrit ci-dessus peut être répété autant de fois que nécessaire jusqu'à un adressage complet des vannes de l'ensemble des blocs secondaires de vannes (les blocs secondaires de vannes 36' sur la figure 3). Le document FR 2 821 453 A1 décrit un procédé d'adressage apparenté au procédé décrit ci-dessus.

Les blocs secondaires de vannes comprennent un marqueur interne ou *« internal flag »* permettant de marquer un bloc de vannes déjà adressé. Cela permet, comme expliqué ci-dessus, de faire en sorte que les blocs secondaires de vannes déjà adressés ne soient pas impliqués dans le procédé d'adressage ci-dessus.

Le procédé ci-dessus peut comprendre deux trames d'information : une première notifiant que, lors d'une trame à venir, les blocs secondaires de vannes doivent réaliser une séquence d'adressage (ou auto-adressage), et une seconde dans laquelle chaque bloc secondaire de vannes détecte, par le procédé décrit ci-dessus, s'il est le bloc secondaire de vannes non adressé le plus éloigné du bloc principal de vannes 12.

Il est à noter que le dispositif de nettoyage 2 de capteurs peut comprendre des blocs secondaires de vannes adressables comme ceux décrits ci-dessus et des blocs de vannes supplémentaires standards et non adressables.

L'information d'adresse mémorisée constitue l'adresse d'un noeud du réseau informatif formé par le réseau électrique multiplexé sur lequel un bloc secondaire de vannes est connecté, cette adresse étant, au niveau de l'unité de contrôle 10, reconnue comme celle de la fonction particulière assurée par ce bloc de vannes.

Ainsi, l'invention est particulièrement avantageuse en ce qu'il suffit que les adresses des blocs secondaires de vannes soient prédéfinies au niveau de l'unité de contrôle 10 en rapport avec l'emplacement de ces derniers. Aucun stockage d'adresse dans un bloc secondaire de vannes préalablement à son montage n'est nécessaire.

En outre, la programmation d'adresses est une opération automatique, rapide, qui peut sans inconvénient étire réalisée à chaque mise sous tension de l'installation. Les adresses peuvent alors être stockées dans des mémoires volatiles des blocs secondaires de vannes.

Bien que le procédé d'identification conforme à l'invention trouve une application particulièrement avantageuse pour la programmation d'adresses, il peut également être appliqué au contrôle de blocs secondaires de vannes montés avec leurs adresses mémorisées de façon matérielle ou logicielle.

### Liste de références

2 : dispositif de nettoyage de capteurs
6 : vannes
8 : capteur
10 : unité de contrôle
12 : bloc principal de vannes
13 : circuit principal de commande
14 : réseau électrique multiplexé
16 : support de connexion électrique
18 : cache
19 : connecteurs
20 : premier bloc secondaire de vannes
22 : premier circuit secondaire de commande
24 : second bloc secondaire de vannes
26 : second circuit secondaire de commande
28 : première mesure d'un courant traversant les blocs secondaires de vannes non adressés dans une première configuration
29 : blocs secondaires de vannes déjà adressés
30 : seconde mesure d'un courant traversant les blocs secondaires de vannes non adressés dans une seconde configuration
31 : blocs secondaires de vannes non adressés
31' : blocs secondaires de vannes pour lesquels la première mesure d'intensité a été effectuée
32 : blocs secondaires de vannes non adressés dont la différence d'intensité entre la seconde mesure et la première mesure est inférieure à une première valeur seuil
32' : blocs secondaires de vannes non adressés dont la différence d'intensité entre la seconde mesure et la première mesure est supérieure à une première valeur seuil
33 : ensemble des blocs secondaires de vannes
34 : troisième mesure d'un courant traversant les blocs secondaires de vannes dont la différence d'intensité entre la seconde mesure et la première mesure est inférieure à une première valeur seuil, ces blocs secondaires de vannes étant dans une troisième configuration
36 bloc secondaire de vannes dont la différence d'intensité entre la troisième mesure et la première mesure est inférieure à une seconde valeur seuil
36' : bloc secondaire de vannes dont la différence d'intensité entre la troisième mesure et la première mesure est supérieure à une seconde valeur seuil.

## Revendications

1. Dispositif de nettoyage (2) de capteurs (8) de véhicule automobile destiné à être monté sur un véhicule automobile, le dispositif comprenant au moins un réservoir de liquide de nettoyage et plusieurs buses de nettoyage pour projeter le liquide de nettoyage sur les différents capteurs à nettoyer, le dispositif de nettoyage comprenant:
- une unité de contrôle (10) configurée pour recevoir et transmettre des informations provenant des différents capteurs (8),
- un bloc principal de vannes (12) configuré pour contrôler l'acheminement de liquide de nettoyage vers un premier ensemble de buses, le bloc principal de vannes comprenant un circuit principal de commande (13) configuré pour recevoir des informations provenant de l'unité de contrôle (10),
- au moins un premier bloc secondaire de vannes (20) configuré pour contrôler l'acheminement de liquide de nettoyage vers un second ensemble de buses, le dispositif de nettoyage étant **caractérisé en ce que** le premier bloc secondaire de vannes comprend un premier circuit secondaire de commande (22) monté électriquement en série par rapport au circuit principal de commande (13) et configuré pour recevoir des informations provenant du bloc principal de vannes (12) et transmettre des informations au bloc principal de vannes (12), la connexion électrique d'acheminement des informations entre l'unité de contrôle (10) et le circuit principal de commande (13) ainsi qu'entre le circuit principal de commande (13) et le premier circuit secondaire de commande (22) étant réalisé par un réseau électrique multiplexé (14).

2. Dispositif de nettoyage (2) de capteurs (8) selon la revendication 1, dans lequel chaque bloc de vannes (12, 20, 24) comprend des électrovannes et un support de connexion électrique (16) des électrovannes au circuit de commande (13, 22, 26).

3. Dispositif de nettoyage (2) de capteurs (8) selon l'une quelconque des revendications précédentes, dans lequel chaque bloc secondaire de vannes (20, 24) comprend une résistance de tirage et un interrupteur configuré pour connecter ou déconnecter la résistance de tirage au réseau électrique multiplexé (14).

4. Dispositif de nettoyage (2) de capteurs (8) selon l'une quelconque des revendications précédentes, dans lequel chaque bloc secondaire de vannes (20, 24) comprend une source de courant constant et un interrupteur configuré pour connecter ou déconnecter la source de courant au réseau électrique multiplexé (14).

5. Dispositif de nettoyage (2) de capteurs (8) selon l'une quelconque des revendications précédentes, dans lequel chaque bloc secondaire de vannes (20, 24) comprend un shunt connecté au réseau électrique multiplexé (14) et configuré pour détecter une intensité de courant le traversant.

6. Dispositif de nettoyage (2) de capteurs (8) selon la revendication 5, dans lequel chaque bloc secondaire de vannes (20, 24) comprend des moyens de détermination de la position du bloc de vannes sur le réseau électrique multiplexé en fonction de l'intensité de courant mesurée.

7. Dispositif de nettoyage (2) de capteurs (8) selon l'une quelconque des revendications précédentes comprenant au moins un second bloc secondaire de vannes (24) configuré pour contrôler l'acheminement de liquide de nettoyage vers un troisième ensemble de buses, le second bloc secondaire de vannes (24) comprenant un second circuit secondaire de commande (26) monté électriquement en série par rapport au premier circuit secondaire de commande (22) et configuré pour recevoir des informations provenant du premier bloc secondaire de vannes (20) et transmettre des informations au premier bloc secondaire de vannes (20), la connexion entre le premier circuit secondaire de commande (22) et le second circuit secondaire de commande (24) étant réalisé par un réseau électrique multiplexé (14).

8. Procédé d'adressage de blocs de vannes (20, 24) d'un dispositif de nettoyage (2) de capteurs (8) selon l'une quelconque des revendications précédentes, le procédé d'adressage comprenant au moins une fois la réalisation des étapes suivantes :
- Première mesure d'un courant traversant les blocs secondaires de vannes (20, 24) non adressés dans une première configuration,
- Seconde mesure d'un courant traversant les blocs secondaires de vannes (20, 24) non adressés dans une seconde configuration,
- Détermination des blocs secondaires de vannes (20, 24) non adressés dont la différence d'intensité entre la seconde mesure et la première mesure est inférieure à une première valeur seuil,
- Troisième mesure d'un courant traversant les blocs secondaires de vannes (20, 24) dont la différence d'intensité entre la seconde mesure et la première mesure est inférieure à une première valeur seuil, ces blocs secondaires de vannes (20, 24) étant dans une troisième configuration,
- Détermination et adressage du bloc secondaire de vannes (20, 24) dont la différence d'intensité entre la troisième mesure et la première mesure est inférieure à une seconde valeur seuil.

9. Procédé d'adressage selon la revendication 8, dans lequel les étapes ont lieu au démarrage du véhicule.

10. Procédé d'adressage selon la revendication 8, dans lequel les étapes ont lieu après ajout d'un bloc secondaire de vannes supplémentaire.

11. Procédé de fonctionnement d'un dispositif de nettoyage selon l'une quelconque des revendications 8 à 10, dans lequel :
- La première configuration correspond à un état dans lequel une résistance de tirage et une source de courant constant présentes au niveau de chaque bloc de vannes sont déconnectées du réseau électrique multiplexé (14),
- La seconde configuration correspond à un état dans lequel la résistance de tirage est connectée au réseau électrique multiplexé (14), la source de courant constant étant déconnectée du réseau électrique multiplexé (14), et
- La troisième configuration correspond à un état dans lequel la résistance de tirage et la source de courant constant sont connectées au réseau électrique multiplexé (14).

12. Procédé de fonctionnement d'un dispositif de nettoyage selon l'une quelconque des revendications 8 à 11, dans lequel les différentes intensités sont détectées par un shunt connecté au réseau électrique multiplexé (14).

13. Procédé de fonctionnement d'un dispositif de nettoyage selon l'une quelconque des revendications 8 à 12, dans lequel le courant traversant les blocs secondaires de vannes (20, 24) non adressés est injecté au moins en partie par des sources de courant constant présentes dans les blocs secondaires de vannes non adressés (20, 24).

## Patentansprüche

1. Reinigungsvorrichtung (2) für Sensoren (8) eines Kraftfahrzeugs, die dazu bestimmt ist, an einem Kraftfahrzeug montiert zu werden, wobei die Vorrichtung mindestens einen Reinigungsflüssigkeitsbehälter und mehrere Reinigungsdüsen zum Sprühen der Reinigungsflüssigkeit auf die verschiedenen zu reinigenden Sensoren umfasst, wobei die Reinigungsvorrichtung umfasst: - eine Steuereinheit (10), die konfiguriert ist, um Informationen von den verschiedenen Sensoren (8) zu empfangen und zu übertragen, - einen Hauptventilblock (12), der konfiguriert ist, um die Zuleitung von Reinigungsflüssigkeit zu einer ersten Gruppe von Düsen zu steuern, wobei der Hauptventilblock eine Hauptsteuerschaltung (13) umfasst, die konfiguriert ist, um Informationen von der Steuereinheit (10) zu empfangen, - mindestens einen ersten Sekundärventilblock (20), der konfiguriert ist, um die Zuleitung von Reinigungsflüssigkeit zu einer zweiten Gruppe von Düsen zu steuern, wobei die Reinigungsvorrichtung **dadurch gekennzeichnet ist, dass** der erste Sekundärventilblock eine erste Sekundärsteuerschaltung (22) umfasst, die elektrisch in Reihe zur Hauptsteuerschaltung (13) geschaltet ist und konfiguriert ist, um Informationen vom Hauptventilblock (12) zu empfangen und Informationen an den Hauptventilblock (12) zu übertragen, wobei die elektrische Verbindung zur Informationsübertragung zwischen der Steuereinheit (10) und der Hauptsteuerschaltung (13) sowie zwischen der Hauptsteuerschaltung (13) und der ersten Sekundärsteuerschaltung (22) durch ein elektrisches Multiplexnetzwerk (14) realisiert ist.

2. Reinigungsvorrichtung (2) für Sensoren (8) nach Anspruch 1, wobei jeder Ventilblock (12, 20, 24) Magnetventile und einen elektrischen Anschlussträger (16) der Magnetventile an die Steuerschaltung (13, 22, 26) umfasst.

3. Reinigungsvorrichtung (2) für Sensoren (8) nach einem der vorhergehenden Ansprüche, wobei jeder Sekundärventilblock (20, 24) einen Pullup-Widerstand und einen Schalter umfasst, der konfiguriert ist, um den Pullup-Widerstand mit dem elektrischen Multiplexnetzwerk (14) zu verbinden oder zu trennen.

4. Reinigungsvorrichtung (2) für Sensoren (8) nach einem der vorhergehenden Ansprüche, wobei jeder Sekundärventilblock (20, 24) eine Konstantstromquelle und einen Schalter umfasst, der konfiguriert ist, um die Stromquelle mit dem elektrischen Multiplexnetzwerk (14) zu verbinden oder zu trennen.

5. Reinigungsvorrichtung (2) für Sensoren (8) nach einem der vorhergehenden Ansprüche, wobei jeder Sekundärventilblock (20, 24) einen Shunt umfasst, der mit dem elektrischen Multiplexnetzwerk (14) verbunden und konfiguriert ist, um eine Stromstärke zu erfassen, die durch ihn fließt.

6. Reinigungsvorrichtung (2) für Sensoren (8) nach Anspruch 5, wobei jeder Sekundärventilblock (20, 24) Mittel zur Bestimmung der Position des Ventilblocks im elektrischen Multiplexnetzwerk in Abhängigkeit von der gemessenen Stromstärke umfasst.

7. Reinigungsvorrichtung (2) für Sensoren (8) nach einem der vorhergehenden Ansprüche, umfassend mindestens einen zweiten Sekundärventilblock (24), der konfiguriert ist, um die Zuleitung von Reinigungsflüssigkeit zu einer dritten Gruppe von Düsen zu steuern, wobei der zweite Sekundärventilblock (24) eine zweite Sekundärsteuerschaltung (26) umfasst, die elektrisch in Reihe zur ersten Sekundärsteuerschaltung (22) geschaltet ist und konfiguriert ist, um Informationen vom ersten Sekundärventilblock (20) zu empfangen und Informationen an den ersten Sekundärventilblock (20) zu übertragen, wobei die Verbindung zwischen der ersten Sekundärsteuerschaltung (22) und der zweiten Sekundärsteuerschaltung (24) durch ein elektrisches Multiplexnetzwerk (14) realisiert ist.

8. Verfahren zur Adressierung von Ventilblöcken (20, 24) einer Reinigungsvorrichtung (2) für Sensoren (8) nach einem der vorhergehenden Ansprüche, wobei das Adressierungsverfahren mindestens einmal die Durchführung der folgenden Schritte umfasst:
- Erste Messung eines Stroms, der durch die nicht adressierten Sekundärventilblöcke (20, 24) in einer ersten Konfiguration fließt,
- Zweite Messung eines Stroms, der durch die nicht adressierten Sekundärventilblöcke (20, 24) in einer zweiten Konfiguration fließt,
- Bestimmung der nicht adressierten Sekundärventilblöcke (20, 24), deren Stromstärkenunterschied zwischen der zweiten Messung und der ersten Messung unter einem ersten Schwellenwert liegt,
- Dritte Messung eines Stroms, der durch die Sekundärventilblöcke (20, 24) fließt, deren Stromstärkenunterschied zwischen der zweiten Messung und der ersten Messung unter einem ersten Schwellenwert liegt, wobei diese Sekundärventilblöcke (20, 24) in einer dritten Konfiguration sind,
- Bestimmung und Adressierung des Sekundärventilblocks (20, 24), dessen Stromstärkenunterschied zwischen der dritten Messung und der ersten Messung unter einem zweiten Schwellenwert liegt.

9. Adressierungsverfahren nach Anspruch 8, wobei die Schritte beim Start des Fahrzeugs stattfinden.

10. Adressierungsverfahren nach Anspruch 8, wobei die Schritte nach Hinzufügen eines zusätzlichen Sekundärventilblocks stattfinden.

11. Betriebsverfahren einer Reinigungsvorrichtung nach einem der Ansprüche 8 bis 10, wobei:
- Die erste Konfiguration einem Zustand entspricht, in dem ein Pullup-Widerstand und eine Konstantstromquelle, die in jedem Ventilblock vorhanden sind, vom elektrischen Multiplexnetzwerk (14) getrennt sind,
- Die zweite Konfiguration einem Zustand entspricht, in dem der Pullup-Widerstand mit dem elektrischen Multiplexnetzwerk (14) verbunden ist, wobei die Konstantstromquelle vom elektrischen Multiplexnetzwerk (14) getrennt ist, und
- Die dritte Konfiguration einem Zustand entspricht, in dem der Pullup-Widerstand und die Konstantstromquelle mit dem elektrischen Multiplexnetzwerk (14) verbunden sind.

12. Betriebsverfahren einer Reinigungsvorrichtung nach einem der Ansprüche 8 bis 11, wobei die verschiedenen Stromstärken durch einen Shunt erfasst werden, der mit dem elektrischen Multiplexnetzwerk (14) verbunden ist.

13. Betriebsverfahren einer Reinigungsvorrichtung nach einem der Ansprüche 8 bis 12, wobei der Strom, der durch die nicht adressierten Sekundärventilblöcke (20, 24) fließt, zumindest teilweise durch Konstantstromquellen eingespeist wird, die in den nicht adressierten Sekundärventilblöcken (20, 24) vorhanden sind.

## Claims

1. Cleaning device (2) for automotive vehicle sensors (8) intended to be mounted on an automotive vehicle, the device comprising at least one cleaning fluid reservoir and several cleaning nozzles for projecting the cleaning fluid onto the different sensors to be cleaned, the cleaning device comprising: - a control unit (10) configured to receive and transmit information from the different sensors (8), - a main valve block (12) configured to control the routing of cleaning fluid to a first set of nozzles, the main valve block comprising a main control circuit (13) configured to receive information from the control unit (10), - at least one first secondary valve block (20) configured to control the routing of cleaning fluid to a second set of nozzles, the cleaning device being **characterized in that** the first secondary valve block comprises a first secondary control circuit (22) electrically mounted in series with respect to the main control circuit (13) and configured to receive information from the main valve block (12) and transmit information to the main valve block (12), the electrical connection for routing information between the control unit (10) and the main control circuit (13) as well as between the main control circuit (13) and the first secondary control circuit (22) being made by a multiplexed electrical network (14).

2. Cleaning device (2) for sensors (8) according to claim 1, wherein each valve block (12, 20, 24) comprises solenoid valves and an electrical connection support (16) of the solenoid valves to the control circuit (13, 22, 26).

3. Cleaning device (2) for sensors (8) according to any one of the preceding claims, wherein each secondary valve block (20, 24) comprises a pull-up resistor and a switch configured to connect or disconnect the pull-up resistor to the multiplexed electrical network (14).

4. Cleaning device (2) for sensors (8) according to any one of the preceding claims, wherein each secondary valve block (20, 24) comprises a constant current source and a switch configured to connect or disconnect the current source to the multiplexed electrical network (14).

5. Cleaning device (2) for sensors (8) according to any one of the preceding claims, wherein each secondary valve block (20, 24) comprises a shunt connected to the multiplexed electrical network (14) and configured to detect a current intensity passing through it.

6. Cleaning device (2) for sensors (8) according to claim 5, wherein each secondary valve block (20, 24) comprises means for determining the position of the valve block on the multiplexed electrical network based on the measured current intensity.

7. Cleaning device (2) for sensors (8) according to any one of the preceding claims comprising at least one second secondary valve block (24) configured to control the routing of cleaning fluid to a third set of nozzles, the second secondary valve block (24) comprising a second secondary control circuit (26) electrically mounted in series with respect to the first secondary control circuit (22) and configured to receive information from the first secondary valve block (20) and transmit information to the first secondary valve block (20), the connection between the first secondary control circuit (22) and the second secondary control circuit (24) being made by a multiplexed electrical network (14).

8. Method for addressing valve blocks (20, 24) of a cleaning device (2) for sensors (8) according to any one of the preceding claims, the addressing method comprising at least once the following steps:
- First measurement of a current passing through the non-addressed secondary valve blocks (20, 24) in a first configuration,
- Second measurement of a current passing through the non-addressed secondary valve blocks (20, 24) in a second configuration,
- Determination of the non-addressed secondary valve blocks (20, 24) for which the difference in intensity between the second measurement and the first measurement is less than a first threshold value,
- Third measurement of a current passing through the secondary valve blocks (20, 24) for which the difference in intensity between the second measurement and the first measurement is less than a first threshold value, these secondary valve blocks (20, 24) being in a third configuration,
- Determination and addressing of the secondary valve block (20, 24) for which the difference in intensity between the third measurement and the first measurement is less than a second threshold value.

9. Addressing method according to claim 8, wherein the steps take place at vehicle startup.

10. Addressing method according to claim 8, wherein the steps take place after adding an additional secondary valve block.

11. Method of operation of a cleaning device according to any one of claims 8 to 10, wherein:
- The first configuration corresponds to a state in which a pull-up resistor and a constant current source present in each valve block are disconnected from the multiplexed electrical network (14),
- The second configuration corresponds to a state in which the pull-up resistor is connected to the multiplexed electrical network (14), the constant current source being disconnected from the multiplexed electrical network (14), and
- The third configuration corresponds to a state in which the pull-up resistor and the constant current source are connected to the multiplexed electrical network (14).

12. Method of operation of a cleaning device according to any one of claims 8 to 11, wherein the different intensities are detected by a shunt connected to the multiplexed electrical network (14).

13. Method of operation of a cleaning device according to any one of claims 8 to 12, wherein the current passing through the non-addressed secondary valve blocks (20, 24) is injected at least in part by constant current sources present in the non-addressed secondary valve blocks (20, 24).
